# EUROPEAN PATENT APPLICATION

(11) **EP 2 325 590 A2**
(43) Date of publication of application: **25.05.2011**
(21) Application number: 10189992.0
(22) Date of filing: 04.11.2010
(51) Int. Cl.: F26B 13/16

(54) **Drying apparatus for manufacturing pressure-sensitive adhesive tape**

(30) Priority: 05.11.2009 JP 2009253758
(71) Applicant: NITTO DENKO CORPORATION, Osaka (JP)
(72) Inventor: Hamada, Atsushi, Ibaraki-shi Osaka (JP); Torita, Hirofumi, Ibaraki-shi Osaka (JP); Sasaki, Shin, Ibaraki-shi Osaka (JP); Yamasaki, Satoru, Ibaraki-shi Osaka (JP); Kuwabara, Ryuji, Ibaraki-shi Osaka (JP)
(74) Representative: Grünecker, Kinkeldey, Stockmair & Schwanhäusser Anwaltssozietät

(57) **Abstract**

A drying apparatus (30) or manufacturing a pressure-sensitive adhesive tape in which a pressure-sensitive adhesive layer is formed on a strip-shaped long tape base material (T) is provided. The drying apparatus (30) dries coating agent (S) coated at least on one surface of the tape base material (T). The tape base material (T) that is transferred in a lengthwise direction thereof is spirally wound around a cylinder body (310a,310b) from one end side of the cylinder body to the other end side of the cylinder body in a slidable state. The cylinder body (310a,310b) is formed with a plurality of air holes (311a,311b) on an entire circumferential wall thereof, around which the tape base material (T) is spirally wound, the air holes (311a,311b) through which warm air or hot air flows from the inside of the cylinder body to the outside of the cylinder body.

## Description

The disclosure of Japanese Patent Application No. 2009-253758 filed on November 5, 2009 including specification, drawings and claims is incorporated herein by reference in its entirety.

### BACKGROUND

The present invention relates to a dr ying apparatus for manufacturing a pressure-sensitive adhesive tape in which a pressure-sensitive adhesive layer is formed on a strip-shaped long tape base material, the drying apparatus that dries coating agent such as a primer or a pressure-sensitive adhesive, coated on the tape base material.

Pressure-sensitive adhesive tapes in which a pressure-sensitive adhesive layer is formed on a strip-shaped tape base material are provided for medical use or office use.

Those adhesive tapes have different materials or compositions of the tape base material or the pressure-sensitive adhesive layer according to their usage. Each tape is manufactured through a drying process that dries the coating agent such as the primer or the pressure-sensitive adhesive coated on the tape base material.

In the pressure-sensitive adhesive tapes, the fluidal adhesive directly coated on the tape base material is dried so that the pressure-sensitive adhesive tape has the pressure-sensitive adhesive layer on which the pressure-sensitive adhesive is directly attached, or the primer coated on the tape base material is dried and then the fluidal adhesive coated on the dried primer is dried so that the pressure-sensitive adhesive tape has the pressure-sensitive adhesive layer on which the pressure-sensitive adhesive is indirectly attached through the primer.

Thus, the manufacturing facility of the pressure-sensitive adhesive tape includes a drying apparatus for drying the coating agent such as the primer or the pressure-sensitive adhesive, coated on the tape base material. Generally, such a drying apparatus includes a housing that defines a chamber (a dry chamber), a transfer device that linearly transfers the tape base material in a lengthwise direction thereof in the housing (the dry chamber), and a hot air generation device that is configured to blow hot air onto the tape base material or the coating agent on the tape base material during transferring. In other words, the drying apparatus transfers the tape base material in the lengthwise direction thereof along a transfer path extending in a straight line and at the same time blows the hot air onto the tape base material or the coating agent on the tape base material.

In this kind of the drying apparatus, since the coating agent is dried by blowing the hot air onto the tape base material or the coating agent on the tape base material during transferring the tape base material, a transfer velocity and the length of a transfer path are set so as to get the drying time required to dry the coating agent (the time to blow the hot air). In this manner, the above-described drying apparatus completes drying of the coating agent during the transfer process of the tape base material within the dry chamber (refer to Patent Document 1).
Patent document 1: JP -A-2001-354927

The drying process (time) of the coating agent is divided into a preheating period that warms up the coating agent, a constant rate drying period that removes solvent included in the coating agent from a surface of the coating agent and a decreasing rate drying period that diffuses the solvent included (remained) in the coating agent which is fixed on the tape base material and thus decreases the amount of the solvent within the coating agent to the predetermined value. The constant rate drying period can effectively remove a large amount of the solvent because a large amount of the solvent is included in the coating agent, and takes relatively short time. On the other hand, the decreasing rate drying period slowly removes a small amount of the solvent because a large amount of the solvent has been removed during the constant rate drying period and only a small amount of the solvent is remained in the coating agent, and takes a considerably long time relative to the preheating period or the constant rate drying period.

Thus, when manufacturing a large number of the pressure-sensitive adhesive tapes for medical use in which a permissible amount of the solvent included in the coating agent (for example, the pressure-sensitive adhesive) is strictly limited and the permissible amount of the solvent is set to a low value, it requires a long time for the drying process because the decreasing rate drying period takes a long time.

Thus, in order to manufacture the pressure-sensitive adhesive tape (in order to dry the coating agent) in the drying apparatus, it is necessary to provide a very long transfer path of the tape base material to get the long drying time and the drying apparatus increases in size.

The drying apparatus can make the drying time longer by causing the transfer velocity of the tape base material to be slower or the length of the transfer path to be longer. Ho wever, if the transfer velocity of the tape base material is set slower, the pressure-sensitive adhesive tape production becomes small. Thus, when the pressure-sensitive adhesive tape is mass-manufactured (manufactured in a predetermined production), the length of the transfer path is longer so as to secure the necessary drying time.

Accordingly, when mass-manufacturing the pressure-sensitive adhesive tape in which a permissible amount of the solvent included in the coating agent (for example, the pressure-sensitive adhesive) is strictly limited and the permissible amount of the solvent is set to a low value, such as the pressure-sensitive adhesive tape for medical use, the conventional drying apparatus has problems in that the length of linear transfer path transferring the tape base material must be very long and the entire apparatus becomes large.

### SUMMARY

It is therefore an object of at least one embodiment of the present invention to provide a drying apparatus for manufacturing the pressure-sensitive adhesive tape, that can reliably dry the coating agent on the tape base material without increasing the drying apparatus in size.

According to an aspect of at least one embodiment of the present invention, there is provided a drying apparatus for manufacturing a pressure-sensitive adhesive tape in which a pressure-sensitive adhesive layer is formed on a strip-shaped long tape base material, the drying apparatus that dries coating agent coated at least on one surface of the tape base material, the drying apparatus comprising: a cylinder body around which the tape base material that is transferred in a lengthwise direction thereof is spirally wound from one end side thereof to the other end side thereof in a slidable state, wherein the cylinder body is formed with a plurality of air holes on an entire circumferential wall thereof, around which the tape base material is spirally wound, the air holes through which warm air or hot air flows from the inside of the cylinder body to the outside of the cylinder body.

With this configuration, since a plurality of air holes through which the warm air or the hot air flows from the inside of the cylinder body to the outside of the cylinder body are formed on the entire circumferential wall of the cylinder body, around which the tape base material is spirally wound, by flowing the warm air or the hot air through the air holes, the warm air or the hot air blows on the tape base material which is wound around the circumferential wall of the cylinder body or on the coating agent coated on the tape base material, and thus the coating agent on the tape base material can be dried.

In addition, since the drying apparatus is provided with the cylinder body around which the tape base material transferred in a lengthwise direction thereof is spirally wound from one end side thereof to the other end side thereof in a slidable state, if a tensile force is applied on a leading end of the tape base material which is spirally wound around the cylinder body, the tape base material slides on the cylinder body in the lengthwise direction thereof while maintaining the spiral shape around the cylinder body. That is, the tape base material moves in the lengthwise direction along a spiral-shaped path.

Since the transfer path (trace) along which the tape base material moves is a spiral shape, the length of the transfer path of the tape base material can be longer than the length of the cylinder body (the length from one end to the other end of the cylinder body). Accordingly, the drying apparatus can get a chance to blow the warm air or the hot air on the tape base material without needlessly increasing the drying apparatus in size. Even when manufacturing the pressure-sensitive adhesive tape that uses coating agent that requires long time to dry, the coating agent can be reliably dried.

Further, since the tape base material is spirally wound around the cylinder body from the one end side of the cylinder body to the other end side of the cylinder body in a slidable manner, the length of the transfer path of the tape base material can be changed by changing the number of winding turns of the tape base material around the circumferential wall of the cylinder body.

The tape base material which is spirally wound around the cylinder body may float on the circumferential wall with a gap therebetween due to an air pressure of the hot air or the warm air so that the tape base material slides on the circumferential wall.

The cylinder body may be provided to change an attitude thereof such that an approach angle of the tape base material to the circumferential wall of the cylinder body can be changed. With this configuration, the length of the tape base material which is wound around the circumferential wall of the cylinder body (which exists on the cylinder body) can be changed. That is, by changing the winding angle of the tape base material with respect to the cylinder body, the spiral pitch of the tape base material that is arranged in a spiral shape around the cylinder body can be changed. As a result, the length of the transfer path of the tape base material (which exists around the cylinder body) can be changed. In this manner, the chance (the drying time) to blow the warm air or the hot air on the tape base material or the coating agent on the tape base material can be changed. Accordingly, when manufacturing many types of the pressure-sensitive adhesive tape different in usage (the tape base materials that use the coating agents different in drying time) in one drying apparatus, the suitable drying process can be performed according to type of the pressure-sensitive adhesive tape (the type of the coating agent). Additionally, by changing the number of winding turns of the tape base material around the circumferential wall of the cylinder body in addition to the change in attitude of the cylinder body, a changeable range of the length of the transfer path of the tape base material can be widen.

The cylinder body may be provided to change an angle of a cylinder axis of the cylinder body with respect to the lengthwise direction of the tape base material transferred to the cylinder body. The drying apparatus may further comprise a tilting device that rotates the cylinder axis of the cylinder body around a rotation axis to change the angle of the cylinder axis of the cylinder body with respect to the lengthwise direction of the tape base material transferred to the cylinder body. The drying apparatus may further comprise a pipe fluidly connected to one end of the cylinder body to introduce the warm air or the hot air into the inside of the cylinder body from a hot air generation device, the rotation axis of the cylinder body may be provided on the pipe and the tilting device is connected to the other end of the cylinder body, and the pipe may be provided with a bellows portion.

The drying apparatus may comprise at least two of cylinder bodies each of which is the above-described cylinder body, the cylinder bodies may be arranged such that the other end side of one of the cylinder bodies faces one end side of another of the cylinder bodies, which is adjacent to the one of the cylinder bodies, and one end side of the one of the cylinder bodies faces the other end side of the another of the cylinder bodies, and the tape base material may be spirally wound around each of the cylinder bodies from the one end side thereof to the other end side thereof and bridge from the other end side of one of the cylinder bodies to one end side of another of the cylinder bodies, which is adjacent to the one of the cylinder bodies. With this configuration, the length of the transfer path of the tape base material increases, and thus the chance to blow the warm air or the hot air onto the long tape base material can be increased. Since the transfer path of the tape base material can be as long as possible, the necessary drying time can be secured even when the transfer velocity of the tape base material is high. Accordingly, the productivity of the pressure-sensitive adhesive tape can be improved.

The cylinder bodies may be symmetrically arranged such that a gap between one end side of one of the cylinder bodies and the other end side of another of the cylinder bodies, which is adjacent to the one of the cylinder bodies is wider than a gap between the other end side of the one of the cylinder bodies and one end side of the another of the cylinder bodies. With this configuration, even when the tape base material bridges from the other end side of the cylinder body at an upstream side (the cylinder body around which the tape base material is first wound) to the one end side of the cylinder body at a downstream side (the cylinder body around which the tape base material is wound after being wound around the cylinder body at the upstream side), it is not necessary to provide, for example, a roller for changing a transfer direction of the tape base material between the cylinder bodies and the approach angle of the tape base material to the cylinder body at the downstream side can be properly set.

The drying apparatus may comprise even numbers of cylinder bodies each of which is the above-described cylinder body. With this configuration, the approach position of the tape base material to the most-upstream cylinder body can be arranged in the same line with the release position of the tape base material from the most-downstream cylinder body. Accordingly, in the transfer direction of the tape base material, a device that is arranged upstream of the drying apparatus (for example, a feeding device that feeds the tape base material) can be arranged in the same line with a device that is arranged downstream of the drying apparatus (for example, a tape rewinding device that rewind the finished pressure-sensitive adhesive tape).

According to the aspect of at least one embodiment of the present invention, it is possible to reliably dry the coating agent on the tape base material without increasing the drying apparatus in size.

### BRIEF DESCRIPTION OF THE DRAWINGS

In the accompanying drawings:
Fig. 1 is a schematic view illustrating a manufacturing facility of a pressure-sensitive adhesive tape, including a schematic cross-sectional view of a drying apparatus for manufacturing the pressure-sensitive adhesive tape according to an embodiment of the present invention;
Fig. 2 is a schematic cross-sectional view illustrating the drying apparatus for manufacturing the pressure-sensitive adhesive tape according to the embodiment, taken along line A-A in Fig. 1;
Fig. 3 is a partially enlarged view illustrating cylinder bodies and the vicinity thereof in the drying apparatus according to the embodiment, when viewed from the same direction as the A-A cross section in Fig.1 in a state where a tape base material is spirally wound around the cylinder bodies;
Fig. 4 is a schematic cross-sectional view illustrating the cylinder body of the drying apparatus according to the embodiment, in a state where the tape base material is wound around the cylinder body;
Fig. 5 is a partially enlarged view illustrating the cylinder bodies and the vicinity thereof in the drying apparatus according to the embodiment, when viewed from the same direction as the A-A cross section in Fig. 1 in a state where the tape base material is wound around the cylinder bodies and a gap between adjacent cylinder bodies is widen;
Fig. 6A is a schematic view illustrating a cylinder body and the vicinity thereof in a drying apparatus according to another embodiment of the present invention, wherein the drying apparatus includes one cylinder body;
Fig. 6B is a schematic view illustrating cylinder bodies and the vicinity thereof in a drying apparatus according to another embodiment of the present invention, wherein the drying apparatus includes three cylinder bodies;
Fig. 7 is a schematic view illustrating the cylinder bodies and the vicinity thereof in a drying apparatus according to another embodiment of the present invention, wherein the drying apparatus includes four cylinder bodies;
Fig. 8 is a schematic view illustrating the cylinder bodies and the vicinity thereof in a drying apparatus according to further embodiment of the present invention, wherein the drying apparatus supplies hot air or warm air from the independent hot air generation device to each cylinder body.
Fig. 9 is a schematic view illustrating the cylinder bodies and the vicinity thereof in a drying apparatus according to further embodiment of the present invention, wherein two cylinder bodies are arranged in parallel with each other;
Fig. 10A is a schematic view illustrating the cylinder body and the vicinity thereof in a drying apparatus according to further embodiment of the present invention, wherein the drying apparatus includes one cylinder body which is arranged in a fixed state; and
Fig. 10B is a schematic view illustrating the cylinder body and the vicinity thereof in a drying apparatus according to further embodiment of the present invention, wherein the drying apparatus includes two cylinder bodies which are arranged in the fixed state.

### DETAILED DESCRIPTION OF THE EMBODIMENTS

Hereinafter, an embodiment of the invention is described with reference to annexed drawings.

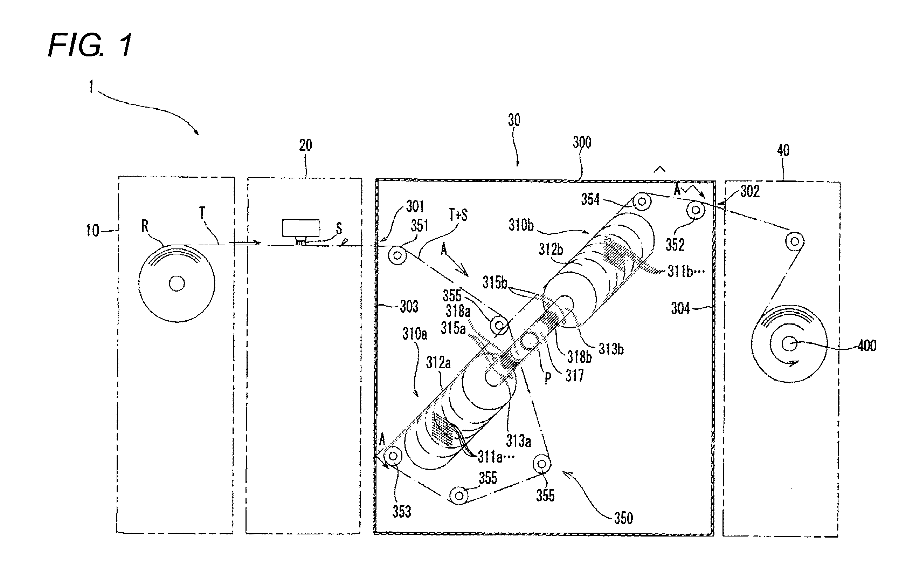

As shown in Fig. 1, a manufacturing facility 1 for manufacturing the pressure-sensitive adhesive tape includes a fe eding device 10 that accommodates a roll R around which the strip-shaped tape base material T is wound therein and feeds the tape base material T in a lengthwise direction thereof from the roll R, a coating device 20 that coats a pressure-sensitive adhesive (a coating agent) S on the tape base material T fed from the feeding device 10, a drying apparatus 30 that dries the coating agent S coated on the tape base material T by the coating device 20, and a tape rewinding device 40 that rewinds the tape base material T in which the drying process of the drying apparatus 30 is completed with the rotating winder shaft 400. In other words, the drying apparatus 30 according to the embodiment is used as a component of the pressure-sensitive adhesive tape manufacturing facility 1 to dry the pressure-sensitive adhesive S coated on the tape base material T.

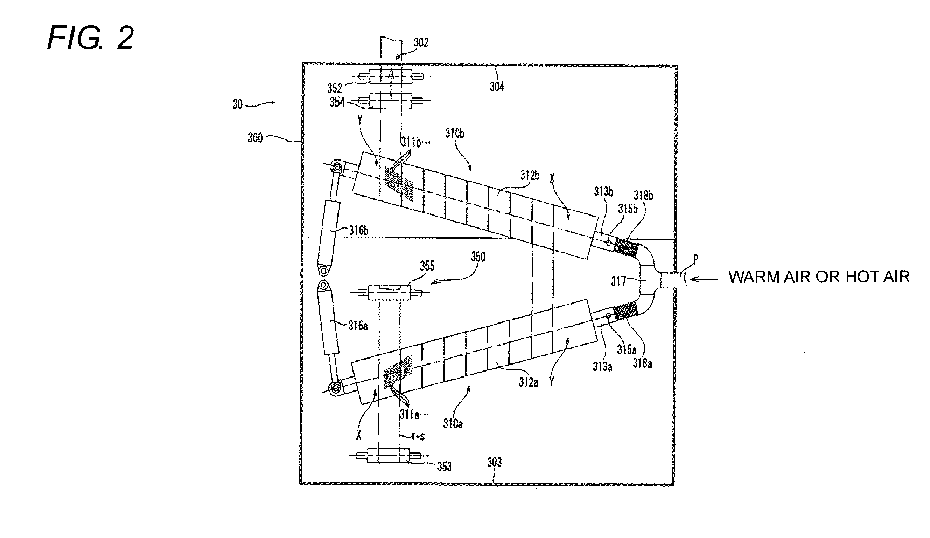

As shown in Figs. 1 to 3, the drying apparatus 30 includes cylinder bodies 310a, 310b around which the long tape base material T that is transferred in the lengthwise direction thereof is spirally wound from one end to the other end of each of the cylinder bodies 310a, 310b in a slidable state. More specifically, as shown in Figs. 1 and 2, the drying apparatus 30 includes a housing 300 defining a dry chamber (space), a cylinder bodies 310a, 310b arranged in the housing 300 and around which the strip-shaped tape base material T is spirally wound, a hot air generation device (not shown in drawings) that generates hot air, and a transfer direction changing device 350 which changes a moving (transfer) direction of the tape base material T within the housing 300.

As shown in Fig. 1, the housing 300 is formed so that the interior space thereof is substantially in a closed state, but is formed with a tape base material inlet 301 for introducing the tape base material T on which the pressure-sensitive adhesive S is coated by the coating device 20 in the housing 300 and a tape base material outlet 302 for discharging the tape base material T in which the drying process is completed toward the tape rewinding device 40. The tape base material inlet 301 and the tape base material outlet 302 are formed on the wall surfaces 303, 304 which face each other.

As shown in Figs. 1 and 2, each of the cylinder bodies 310a, 310b is formed with a plurality (an endless number) of air holes 311a, 311b on an entire circumferential wall around which the tape base material T is wound. High temperature hot air flows from the inside to the outside of the cylinder bodies 310a, 310b through the air holes 311a, 311b. More specifically, the cylinder bodies 310a, 310b include cylinder main bodies 312a, 312b on which a plurality (an endless number) of air holes 311a, 311b are formed on the entire circumferential wall and a hot air introducing pipes 313a, 313b for introducing hot air into the cylinder main bodies 312a, 312b from the hot air generation device. Figs. 1 and 2 only show some of the air holes 311a, 311b, and the other air holes 311 a, 311 b are omitted.

The hot air introducing pipes 313a, 313b are fluidly connected to one end of the cylinder main bodies 312a, 312b and can introduce hot air from the hot air generation device into the cylinder main bodies 312a, 312b. Thus, the drying apparatus 30 can discharge hot air to the outside (in the diameter direction of the cylinder bodies 310a, 310b) through the air holes 311a, 311b formed on the circumferential walls (the outer circumference) of the cylinder main bodies 312a, 312b.

The drying apparatus 30 according to the embodiment includes two cylinder bodies 310a, 310b which are arranged adjacent to each other such that the other end side of one cylinder body 310a faces one end side of another cylinder body 310b which is adjacent to one cylinder body 310a and one end side of one cylinder body 310a faces the other end side of another cylinder body 310b. In other words, the cylinder bodies 310a, 310b in the drying apparatus 30 according to the embodiment are arranged such that an approach position X of the tape base material T to one cylinder body 310a is adjacent to a release position Y of the tape base material T from another cylinder body 310b and a release position of the tape base material T from one cylinder body 310a is adjacent to an approach position X of the tape base material T to another cylinder body 310b.

Thus, the drying apparatus 30 according to the embodiment is configured such that the tape base material T bridges from the other end side of one cylinder body 310a to one end side of another cylinder body 310b which is adjacent to the one cylinder body 310a and is spirally wound around each of the cylinder bodies 310a, 310b from one end side to the other end side. In other words, in the drying apparatus 30, the tape base material T is spirally wound from the approach position X to the release position Y of one cylinder body 310a which is located upstream in the transfer direction of the tape base material T, bridges from the release position Y of one cylinder body 310a to the approach position X of another cylinder body 310b which is located downstream in the transfer direction of the tape base material T, and is spirally wound from the approach position X to the release position Y of another cylinder body 310b.

In the drying apparatus 30 according to the embodiment, two cylinder bodies 310a, 310b are symmetrically arranged such that a gap between one end side of one cylinder body 310a and the other end side of another cylinder body 310b which is adjacent to the one cylinder body 310a is wider than a gap between the other end side of one cylinder body 310a and one end side of another cylinder body 310b. In other words, in the drying apparatus 30, two cylinder bodies 310a, 310b which are adjacent to each other are arranged to have V shape.

As described above, even when the tape base material T directly bridges from the release position Y of one cylinder body 310a to the approach position X of another cylinder body 310b, an approach angle of the tape base material T to the circumferential wall of another cylinder body 310b (an angle formed by a shaft center of another cylinder body 310b and a moving direction of the tape base material T) can be more than a right angle, and the approach angle of the tape base material T to the circumferential wall of another cylinder body 310b can be equal to an approach angle of the tape base material T to the circumferential wall of one cylinder body 310a (an angle formed by a shaft center of one cylinder body 310a and a moving direction of the tape base material T).

In the drying apparatus 30 according to the embodiment, the cylinder bodies 310a, 310b are arranged such that the shaft center (center line) of each of the cylinder bodies 310a, 310b is arranged on an imaginary surface that is widen from the downside toward the tilted upside (otherwise, from the upside to the tilted downside). In other words, as described above, while maintaining the symmetrical arrangement of two cylinder bodies 310a, 310b, the cylinder bodies 310a, 310b are arranged in a direction from the downside to the tilted upside (otherwise, from the upside to the tilted downside). Thus, two cylinder bodies 310a, 310b are diagonally arranged within the housing 300 so that housing 300 can have a minimum size.

In the drying apparatus 30 according to the embodiment, each of the cylinder bodies 310a, 310b is provided to change an attitude thereof such that the approach angle of the tape base material T to the circumferential wall of each of the cylinder bodies 310a, 310b is changeable.

More specifically, each of the cylinder bodies 310a, 310b is provided to change an angle of a cylinder axis of each of the cylinder bodies 310a, 310b with respect to the lengthwise direction of the tape base material T transferred to each of the cylinder bodies 310a, 310b. A tilting device 316a rotates the cylinder axis of the cylinder body 310a around a rotation axis 315a of the cylinder body 310a to change the attitude of the cylinder body 310a (the angle of the cylinder axis of the cylinder body 310a with respect to the lengthwise direction of the tape base material T). A tilting device 316b rotates the cylinder axis of the cylinder body 310b around a rotation axis 315b of the cylinder body 310b to change the attitude of the cylinder body 310b (the angle of the cylinder axis of the cylinder body 310b with respect to the lengthwise direction of the tape base material T). The rotation axes 315a, 315b of the cylinder bodies 310a, 310b are provided at one side (one end side or the other end side) of the cylinder bodies 310a, 310b.

In the drying apparatus 30 according to the embodiment, since two cylinder bodies 310a, 310b are symmetrically arranged, one cylinder body 310a located upstream in the tr ansfer direction of the tape base material T has its rotation axis 315a at the other end side thereof (at a side of the release position Y) and another cylinder body 310b located downstream has its rotation axis 315b at one end side thereof (at a side of the approach position X). In the drying apparatus 30, since the tape base material T is wound around the circumferential walls of the cylinder bodies 310a, 310b, the rotation axes 315a, 315b of cylinder bodies 310a, 310b are provided on the hot air introducing pipes 313a, 313b. Thus, the rotation axes (rotation center line) 315a, 315b of the cylinder bodies 310a, 310b are substantially parallel to each other.

Each of the tilting devices 316a, 316b that rotates the cylinder bodies 310a, 310b around the rotation axes 315a, 315b may be comprised of a pulse motor or a servo motor that can directly rotate the cylinder bodies 310a, 310b to adjust the rotation angle. In the embodiment, an electric cylinder is used as the tilting devices 316a, 316b. In the embodiment, each of the electric cylinders 316a, 316b includes a cylinder main body (not shown) and a shaft-shaped piston rod (not shown) that is concentrically inserted into the cylinder main body. T he cylinder end of the cylinder main body is rotatably fixed to the housing 300 (a frame of the housing 300) around a rotation shaft that is substantially parallel to the rotation axes 315a, 315b (rotation center line) of the cylinder bodies 310a, 310b, and the rod end of the piston rod that is insertable and retractable to the cylinder main body is pivotally connected to one end (opposite to the other end on which the rotation axes 315a, 315b are formed) of the cylinder bodies 310a, 310b.

In the drying apparatus 30 according to the embodiment, since two cylinder bodies 310a, 310b are arranged adjacent to each other, the rod end of one tilting device 316a (the electric cylinder 316a) that moves one cylinder body 310a is pivotally connected to a connection that is continuously provided on one end of one cylinder body 310a, and the rod end of the other tilting device 316b (the electric cylinder 316b) that moves another cylinder body 310b is pivotally connected to a connection that is continuously provided on the other end (at a side of the release position Y) of another cylinder body 310b. Both tilting devices 316a, 316b (the electric cylinders 316a, 316b) are arranged such that the advancing/retreating direction of the piston rod extends along the tangential direction to the rotation path through which end portions of the cylinder bodies 310a, 310b are passed.

Thus, each of the tilting devices 316a, 316b synchronously moves (changes the attitude of) each of the cylinder bodies 310a, 310b at the same time. In other words, each of the tilting devices 316a, 316b is operated to match the expansion/contraction amounts or expansion/contraction timings of the piston rods. Thus, two cylinder bodies 310a, 310b changes the angles while maintaining their symmetrical positions.

Since the cylinder bodies 310a, 310b include the hot air introducing pipes 313a, 313b, the hot air introducing pipes 313a, 313b may be connected to independent hot air generation devices, respectively. In the embodiment, a T-shaped joint 317 (T-type joint) is connected to the pipe P that is connected one hot air generation device, and the hot air introducing pipes 313a, 313b of the cylinder bodies 310a, 310b are connected to remaining two ports of the T-type joint 317. Thus, hot air from one hot air generation device can be supplied to each of two cylinder bodies 310a, 310b.

The drying apparatus 30 according to the embodiment can rotate the cylinder bodies 310a, 310b around the rotation axes 315a, 315b and provides the rotation axes 315a, 315b of the cylinder bodies 310a, 310b on the hot air introducing pipes 313a, 313b. Thus, bellows portions 318a, 318b are provided at a predetermined area (between the T-type joint 317 and positions on which the rotation axes 315a, 315b are set) in the hot air introducing pipes 313a, 313b in order to maintain the fluidal connection with the hot air generation device while permitting the rotation of the cylinder bodies 310a, 310b.

The hot air generation device may be a boiler using heavy oil, diesel oil or gas as a fuel, or may include an electric heater.

As shown in Fig. 1, the transfer direction changing device 350 changes the transfer direction of the tape base material T and includes a plurality of rollers 351, 352, 353, 354 and 355. Specifically, the drying apparatus 30 according to the embodiment includes the guide rollers 351, 352 for changing the approach direction of the tape base material T in the vicinity of the tape base material inlet 301 and the tape base material outlet 302 as the transfer direction changing device 350.

The transfer direction changing device 350 according to the embodiment includes a suction roller (hereinafter referred to the first suction roller) 353 that is arranged with a gap at one end side (the approach position X) of one cylinder body 310a at the upstream side and a suction roller (hereinafter referred to the second suction roller) 354 that is arranged with a gap at the other end side (the release position Y) of another cylinder body 310b at the downstream side.

The first suction roller 353 can change the transfer direction of the tape base material T which is wound therearound while sucking the tape base material T. In other words, the first suction roller 353 is configured to suck the tape base material T wound around the outer circumference thereof and to rotate around a rotation shaft extending at a right angle to the transfer direction of the tape base material T (a transfer direction in which the tape base material T is to be transferred). Thus, the rotation shaft of the first suction roller 353 is arranged so as to form predetermined angle to the shaft center of one cylinder body 310a. In other words, the first suction roller 353 guides the tape base material T that is transferred from the upstream side so that the approach direction of the tape base material T to the circumferential walls of the cylinder bodies 310a, 310b are tilted with respect to the shaft center of cylinder body 310a.

The second suction roller 354 can change the transfer direction of the tape base material T which is wound therearound while sucking the tape base material T in the same manner as the first suction roller 353. In other words, the second suction roller 354 is configured to suck the tape base material T wound around the outer circumference thereof and to rotate around a rotation shaft extending at a right angle to the transfer direction of the tape base material T (a transfer direction in which the tape base material T is to be transferred). Thus, the rotation shaft of the second suction roller 354 is arranged so as to form a predetermined angle to the shaft center of another cylinder body 310b. In other words, the second suction roller 354 guides and transfers the tape base material T that is spirally wound around another cylinder body 310b so that the release direction of the tape base material T from the circumferential wall of another cylinder body 310b is tilted with respect to the shaft center of another cylinder body 310b.

Furthermore, the transfer direction changing device 350 according to the embodiment includes auxiliary rollers 355 that are suitably arranged between guide rollers 351, 352 and suction rollers 353, 354. Thus, the drying apparatus 30 according to the embodiment guides the tape base material T from the tape base material inlet 301 so as to direct it from the guide roller 351 toward the first suction roller 353, and then guides the tape base material T from another cylinder body 310b as to direct it from the second suction roller 354 to the guide roller 352 provided in the vicinity of the tape base material outlet 302.

The drying apparatus 30 according to the embodiment is configured as described above and description will be made regarding the operation of the drying apparatus 30 with a method of manufacturing the pressure-sensitive adhesive tape.

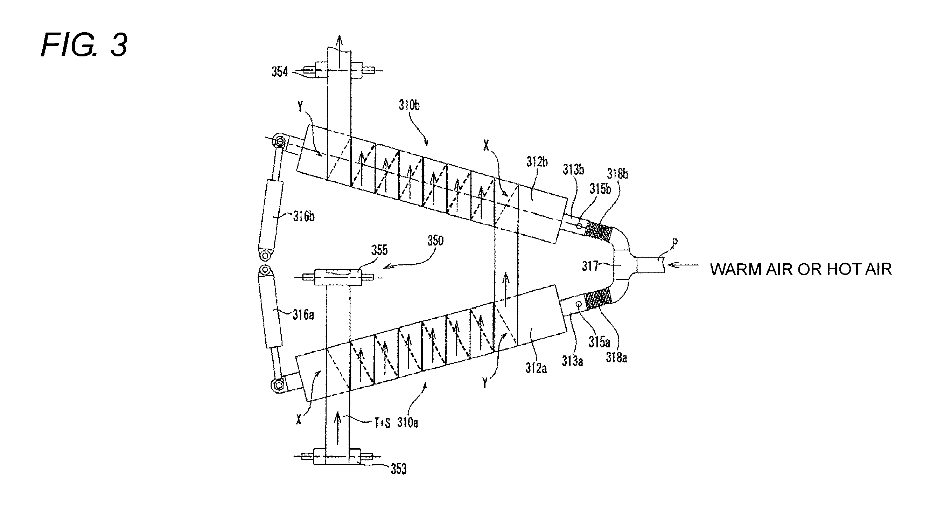

First of all, the tape base material T is set on the manufacturing line of the pressure-sensitive adhesive tape. Specifically, as shown in Fig. 1, the tape base material T is fed from the feeding device 10 and is introduced into the housing 300 through the tape base material inlet 301. The tape base material T introduced into the housing 300 is suitably wound on the guide roller 351, the auxiliary rollers 355, and the first suction roller 353. Then, as shown in Fig.3, the tape base material T is spirally wound around the circumferential wall of one cylinder body 310a (the main body of the cylinder body 310a) from one end side (the approach position X) to the other end side (the release position Y) of one cylinder body 310a, bridges from the other end side (the release position Y) of one cylinder body 310a to one end side (the approach position X) of another cylinder body 310b, and is spirally wound around the circumferential wall of another cylinder body 310b (the main body of the cylinder body 310b) from one end side (the approach position X) to the other end side (the release position Y) of another cylinder body 310b.

Thus, as shown in Fig. 1, after the tape base material T that is taken out from the other end side (the release position Y) of another cylinder body 310b is suitably wound on the second suction roller 354 or the guide roller 352, the tape base material T is guided to the tape rewinding device 40 through the tape base material outlet 302 and the leading end of the tape base material T is attached to the winder shaft 400 of the tape rewinding device 40. In this manner, the tape base material T is completely set in the manufacturing facility 1.

In the embodiment, the tape base material T is set such that the tape base material T faces to the circumferential walls of the cylinder bodies 310a, 310b, in the state that the pressure-sensitive adhesive S is coated on the tape base material T. In other words, in the manufacturing facility 1 including the drying apparatus 30 according to the embodiment, the coating device 20 is provided such that when the tape base material T is wound around the circumferential walls of the cylinder bodies 310a, 310b, the coating agent S is coated to the opposite surface (the other side surface) of one side surface of the tape base material T that faces the circumferential walls of the cylinder bodies 310a, 310b.

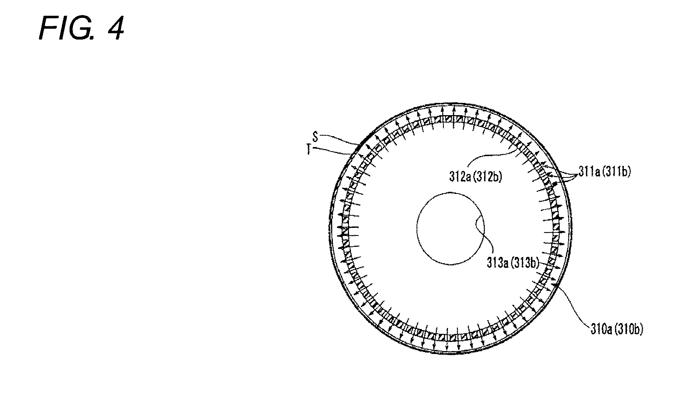

Hot air is generated by the hot air generation device and supplied to each of the cylinder bodies 310a, 310b. Then, the hot air supplied to each of the cylinder bodies 310a, 310b is discharged to the outside through an endless number of air holes 311a, 311b that are formed on the circumferential walls of the cylinder bodies 310a, 310b and the tape base material T that is spirally wound around the circumferential walls of the cylinder bodies 310a, 310b floats on the circumferential walls of the cylinder bodies 310a, 310b with a gap therebetween due to an air pressure of the discharged hot air (denoted by arrows in Fig. 4) as shown in Fig. 4.

Then, the coating device 20 and the tape rewinding device 40 are operated, and as shown in Fig. 1, the coating agent S is coated on at least on one surface (one side surface in the embodiment) of the tape base material T and at the same time the tape base material T is moved in the lengthwise direction thereof.

At this time, since the tape base material T is spirally wound around the circumferential walls of the cylinder bodies 310a, 310b and the tape base material T floats on the circumferential walls of the cylinder bodies 310a, 310b with a gap therebetween due to the air pressure of the hot air, as described above, when the winder shaft 400 of the tape rewinding device 40 is rotated (the tape base material T is wound) and thus a tensile force is operated to the tape base material T, the tape base material T around the cylinder bodies 310a, 310b does not generate resistance to the cylinder bodies 310a, 310b and moves in the lengthwise direction as shown in Fig. 3. Thus, the coating agent S is coated on the tape base material T by the coating device 20 and the tape base material T moves along the spiral-shaped path around each of the cylinder bodies 310a, 310b. In other words, the tape base material T coated with the coating agent S moves along the spiral-shaped path around the circumferential wall of one cylinder body 310a, and then it moves along the spiral-shaped path around the circumferential wall of another cylinder body 310b.

Accordingly, hot air blows to the tape base material T during the tape base material T moves on the outer circumference of the cylinder bodies 310a, 310b. Thus, the drying process is performed in accordance with the moving distance (moving time) of the tape base material T. Specifically, assuming that the strip-shaped (long) tape base material T is a continuous body of a plurality of drying process object portions, when each of the drying process object portions moves from the approach position X to the release position Y of one cylinder body 310a and moves from the approach position X to the release position Y of another cylinder body 310b, hot air always blows thereon.

Accordingly, the drying apparatus 30 according to the embodiment secures the dry distance of the tape base material T and at the same time reliably performs the drying in a smaller space than the conventional drying apparatus 30 in which the tape base material T is transferred and dried in a straight line transfer path, because the length of the tape base material T that is wound around the cylinder bodies 310a, 310b (the length of tape base material T in a spiral shape) corresponds to the chance to blow hot air thereon (dry distance). The tape base material T (the tape base material T that becomes one composition of the pressure-sensitive adhesive tape, on which the coating agent S is dried) moved out of the drying apparatus 30 is wound on the tape rewinding device 40 and becomes a roll R of the pressure-sensitive adhesive tape.

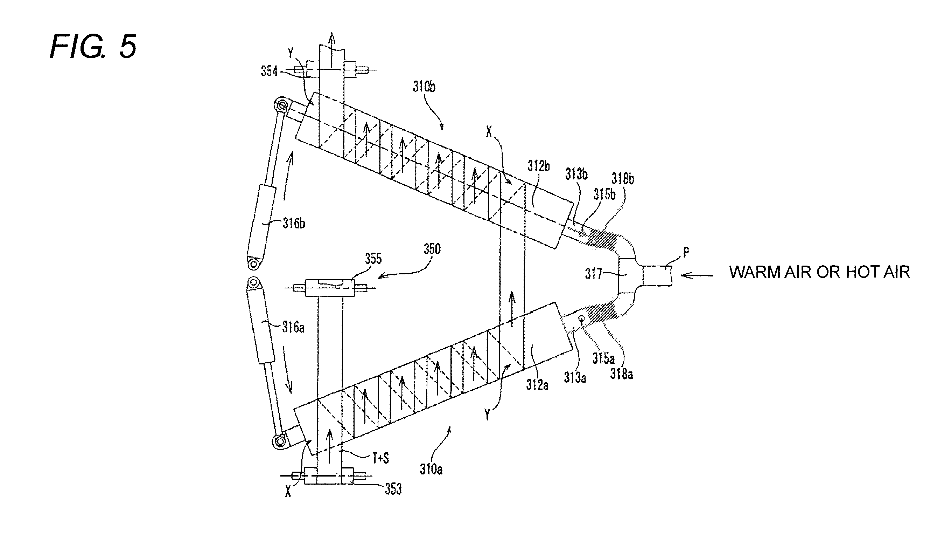

When manufacturing the pressure-sensitive adhesive tapes (the pressure-sensitive adhesive tapes that are different in time required to dry process) each having different pressure-sensitive adhesive S or tape base material T by the above described process, if base materials of the coating agent S or tape base material T are different or permissible value of the remained solvent of the coating agent S or the like is different, as shown in Fig. 5, each of the cylinder bodies 310a, 310b is tilted by the tilting devices 316a, 316b. In other words, when the drying time is short (the chance to blow the hot air is short), the cylinder bodies 310a, 310b are tilted so that the approach angle of the tape base material T to the circumferential walls of the cylinder bodies 310a, 310b is large, and when the drying time is long (the chance to blow the hot air is long), the cylinder bodies 310a, 310b are tilted so that the approach angle of the tape base material T to the circumferential walls of the cylinder bodies 310a, 310b is small.

Because the drying apparatus 30 according to the embodiment includes two cylinder bodies 310a, 310b, when the drying time is short (the chance to blow the hot air is short), both cylinder bodies 310a, 310b are tilted so that the relative angle of two cylinder bodies 310a, 310b is large, and when the drying time is long (the chance to blow the hot air is long) both cylinder bodies 310a, 310b are tilted so that the relative angle of both cylinder bodies 310a, 310b is small.

Then, the same as the above case, after the tape base material T is set in the manufacturing line, the coating agent S is coated on the tape base material T and the coating agent S is dried by the drying apparatus 30.

In this manner, by tilting the cylinder bodies 310a, 310b to change the approach angle of the tape base material T to the circumferential walls of the cylinder bodies 310a, 310b, the spiral pitch (the winding angle) of the tape base material T spirally wound around the circumferential walls of the cylinder bodies 310a, 310b is changed. Thus, the length of the tape base material T wound around the circumferential walls of the cylinder bodies 310a, 310b can be long or short, the chance to blow the hot air can be changed in accordance with the types of the pressure-sensitive adhesive tape to be manufactured, and necessary drying process can be performed reliably.

As described above, in the drying apparatus 30 according to the embodiment, since a plurality of air holes 311a, 311b through which warm air or hot air flows from the inside of the cylinder bodies 310a, 310b to the outside of the cylinder bodies 310a, 310b are formed on the entire circumferential walls of the cylinder bodies 310a, 310b, around which the tape base material T is spirally wound, by blowing warm air or hot air through the air holes 311a, 311b, warm air or hot air can blow on the tape base material T which is wound around the circumferential walls of the cylinder bodies 310a, 310b or on the coating agent S on the tape base material T, and thus the coating agent S on the tape base material T can be dried.

Since the drying apparatus 30 according to the embodiment is provided with the cylinder bodies 310a, 310b around which the long tape base material T that is transferred in a lengthwise direction thereof is spirally wound from one end side to the other end side thereof in a slidable state, when a tensile force is applied on the leading end of the tape base material T that is spirally wound around the cylinder bodies 310a, 310b, the tape base material T slides on the cylinder bodies 310a, 310b in the lengthwise direction thereof while maintaining the spiral shape around the cylindrical bodies 310a, 310b. In other words, the tape base material T moves in the lengthwise direction along a spiral shaped-path.

Since the transfer path (trace) along which the tape base material T moves is a spiral shape, the length of the transfer path of the tape base material T can be longer than the length of each of the cylinder bodies 310a, 310b (the length from one end to the other end of each of the cylinder bodies 310a, 310b).

Accordingly, the drying apparatus 30 according to the embodiment can get a chance to blow hot air on the tape base material T without needlessly increasing the drying apparatus 30 in size. Thus, even when manufacturing the pressure-sensitive adhesive tape that uses the coating agent S which requires a long time to dry, the coating agent S can be reliably dried.

In addition, in the drying apparatus 30 according to the embodiment, since the tape base material T is spirally wound around circumferential walls of the cylinder bodies 310a, 310b from one end side to the other end side of each of the cylinder bodies 310a, 310b in a slidable manner, the length of the transfer path of the tape base material T can be changed by changing the number of winding turns of the tape base material T around the circumferential wall of each of the cylinder bodies 310a, 310b.

In the drying apparatus 30 according to the embodiment, the tape base material T which is spirally wound around the cylinder bodies 310a, 310b floats on the circumferential walls of the cylinder bodies 310a, 310b with a gap therebetween due to the air pressure of hot air or warm air so that the tape base material T slides on the circumferential walls of the cylinder bodies 310a, 310b.

Also, in the drying apparatus 30 according to the embodiment, the cylinder bodies 310a, 310b are provided to change an attitude thereof such that the approach angle of the tape base material T to the circumferential walls of the cylinder bodies 310a, 310b can be changed. Accordingly, the length of the tape base material T that is wound around the circumferential walls of the cylinder bodies 310a, 310b (the tape base material T which exists on the cylinder bodies 310a, 310b) can be changed. In other words, by changing the winding angle of the tape base material T with respect to the cylinder bodies 310a, 310b, the spiral pitch of the tape base material T that is arranged in a spiral shape around the cylinder bodies 310a, 310b can be changed. As a result, the length of transfer path of the tape base material T (that exists around the cylinder bodies 310a, 310b) can be changed.

Thus, the chance (the drying time) to blow warm air or hot air onto the tape base material T or the coating agent S on the tape base material T can be changed. Accordingly, when manufacturing the pressure-sensitive adhesive tapes which are different in usage (the pressure-sensitive adhesive tapes that use the coating agent S that are different in the drying time) in one drying apparatus 30; the suitable drying process can be performed according to the type of the pressure-sensitive adhesive tape (the type of the coating agent S) to be manufactured. Also, as described above, by changing the number of winding turns of the tape base material T around the circumferential walls of the cylinder bodies 310a, 310b in addition to the change in attitude of the cylinder bodies 310a, 310b, a changeable range of the length of the transfer path of the tape base material T can be widen.

In the drying apparatus 30 according to the embodiment, each of the cylinder bodies 310a, 310b is provided to change an angle of a cylinder axis of each of the cylinder bodies 310a, 310b with respect to the lengthwise direction of the tape base material T transferred to the cylinder bodies 310a, 310b. The drying apparatus 30 according to the embodiment further comprises tilting devices 316a, 316b that rotate the cylinder axes of the cylinder bodies 310a, 310b around rotation axes 315a, 315b to change the angle of the cylinder axes of the cylinder bodies 310a, 310b with respect to the lengthwise direction of the tape base material T transferred to the cylinder bodies 310a, 310b. The drying apparatus 30 according to the embodiment further comprises hot air introducing pipes 313a, 313b which are fluidly connected to one end of each of the cylinder bodies to introduce warm air or hot air into the inside of each of the cylinder bodies 310a, 310b from a hot air generation device. The rotation axes 315a, 315b of the cylinder bodies 310a, 310b are provided on the hot air introducing pipes 313a, 313b and the tilting devices 316a, 316b are connected to the other end of each of the cylinder bodies 310a, 310b, and the hot air introducing pipes 313a, 313b are provided with bellows portions 318a, 318b.

Furthermore, the drying apparatus 30 according to the embodiment includes two cylinder bodies 310a, 310b which are arranged such that the other end side of one cylinder body 310a faces one end side of another cylinder body 310b, which is adjacent to the one cylinder body 310a, and one end side of one cylinder body 310a faces the other end side of another cylinder body 310b, and the tape base material T spirally wound around each of the cylinder bodies 310a, 310b from one end side to the other end side of each of the cylinder bodies 310a, 310b and bridges from the other end side of one cylinder body 310a to one end side of another cylinder body 310b, which is adjacent to one cylinder body 310a. Accordingly, the length of transfer path of the tape base material T increase, and thus the chance to blow warm air or hot air onto the long tape base material T can be increased. Since the transfer path of the tape base material T can be as long as possible, the necessary drying time can be secured even when the transfer velocity of tape base material T is high. Accordingly, the productivity of the pressure-sensitive adhesive tape can be improved.

The cylinder bodies 310a, 310b are symmetrically arranged such that a gap between one end side of one cylinder body 310a and the other end side of another cylinder body 310b, which is adjacent to one cylinder body 310a is wider than a gap between the other end side of one cylinder body 310a and one end side of another cylinder body 310b. Thus,even when the tape base material T bridges from the other end side of the cylinder body 310a at upstream side (the cylinder body 310a around which the tape base material T is first wound) to one end side of the cylinder body 310b at downstream side (the cylinder body 310b around which the tape base material T is wound after being wound around the cylinder body 310a at the upstream side), it is not necessary to provide rollers or the like for changing the transfer direction of the tape base material T between the cylinder bodies 310a, 310b and the approach angle of the tape base material T to the cylinder body 310b at the downstream side can be properly set.

The drying apparatus 30 according to the embodiment includes even numbers of the cylinder bodies 310a, 310b (two cylinder bodies 310a, 310b in this embodiment) so that the approach position of the tape base material T to the most-upstream cylinder body 310a can be arranged in the same line with the release position of the tape base material T from the most-downstream cylinder body 310b.Thus, in the transfer direction of the tape base material T, the feeding device 10 that is positioned upstream of the drying apparatus 30 and the tape rewinding device 40 that is positioned downstream of the drying apparatus 30 can be arranged in a line.

In addition, the drying apparatus for manufacturing the pressure-sensitive adhesive tape of the invention is not limited to above embodiment, and a number of modifications can be made to the embodiments without substantially departing from the gist of the invention.

In above described embodiment, the pressure-sensitive adhesive is used as the coating agent S. However the present invention is not limited to the embodiment. The coating agent S may also be a primer that is coated to the tape base material T before the pressure-sensitive adhesive is coated. In other words, the drying apparatus 30 does not necessarily dry the pressure-sensitive adhesive S. The drying object can also be the primer as the coating agent S wherein the primer is coated to the tape base material T before the pressure-sensitive adhesive S is coated.

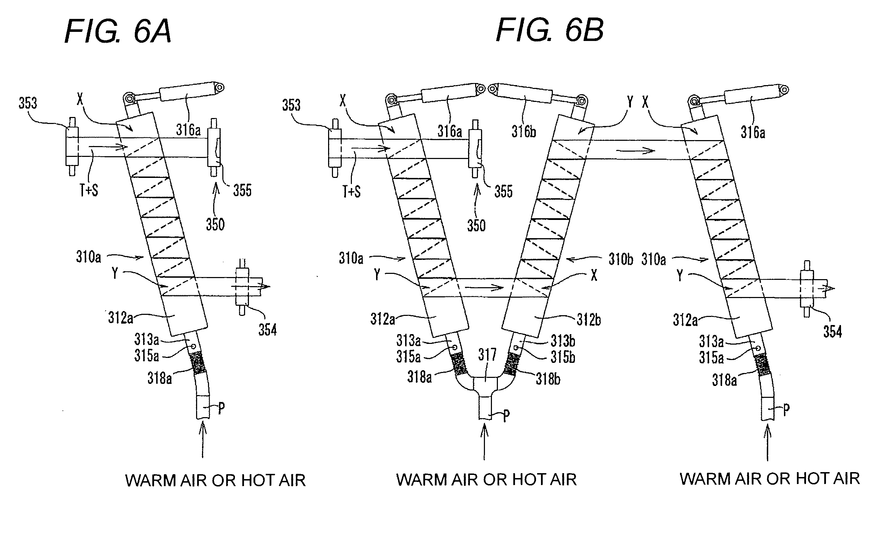

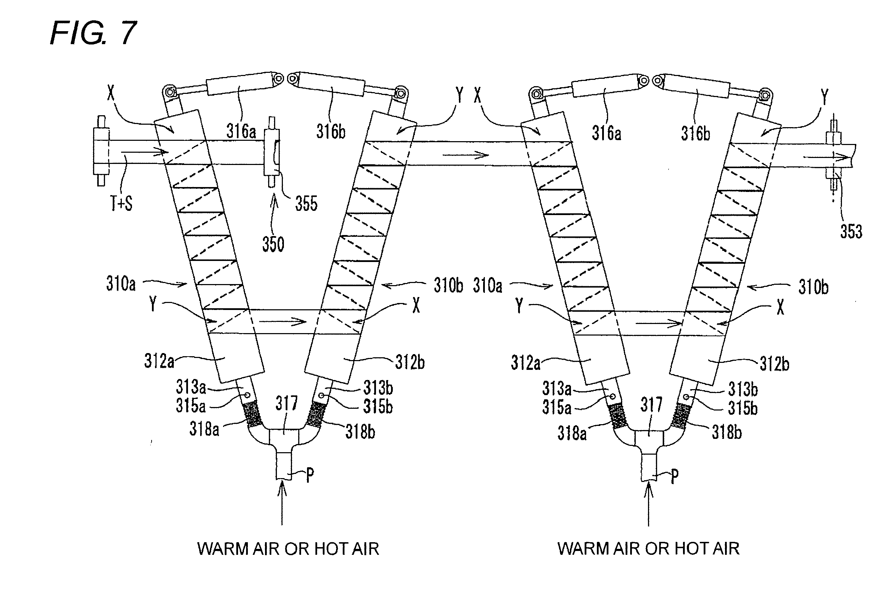

In above described embodiment, two cylinder bodies 310a, 310b are provided. However the present invention is not limited to the embodiment. For example, one cylinder body 310a may be provided as shown in Fig.6A, three cylinder bodies 310a, 310b may be provided as shown in Fig. 6B, or four cylinder bodies 310a, 310b may be provided as shown in Fig. 7. In other words, at least one cylinder body may be provided in the drying apparatus. Of course, the cylinder body is provided such that the tape base material T can be spirally wound around the cylinder body from one end side to the other end side of the cylinder body in a slidable manner.

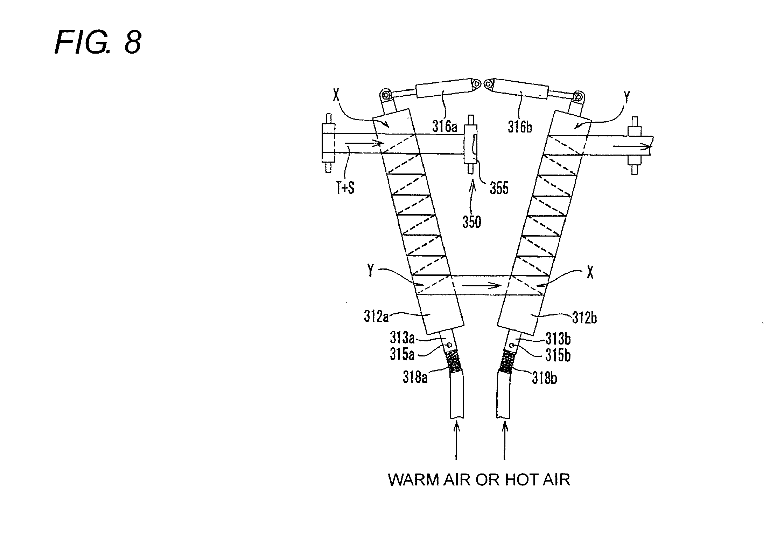

In above described embodiment, each of the hot air introducing pipes 313a, 313b of the cylinder bodies 310a, 310b is connected by T-type joint 317, and hot air is supplied to each of the cylinder bodies 310a, 310b from only one hot air generation device. However the present invention is not limited to the embodiment. For example, as shown in Fig. 8, hot air generation devices are connected to the hot air introducing pipes 313a, 313b of cylinder bodies 310a, 310b in one-to-one correspondence and hot air from each hot air generation device may also be supplied to each of the cylinder bodies 310a, 310b.

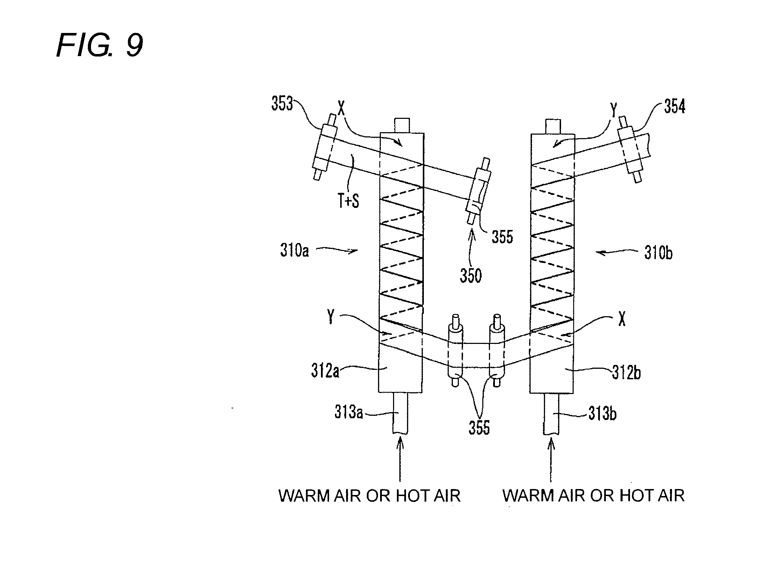

In above described embodiment, the cylinder bodies 310a, 310b are symmetrically arranged such that a gap between one end side of one cylinder body 310a and the other end side of another cylinder body 310b adjacent to one cylinder body 310a is wider than a gap between the other end side of one cylinder body 310a and one end side of another cylinder body 310b. However, for example, when two or more cylinder bodies 310a, 310b are provided, as shown in Fig. 9, the cylinder bodies 310a, 310b may also be arranged in parallel with each other. In this case, if the tape base material T approaches to each of the cylinder bodies 310a, 310b at a right angle, the tape base material T cannot be wound around the circumferential walls of the cylinder bodies 310a, 310b in a spiral shape. Th us, the transfer direction changing device 350 such as rollers (for example, the suction rollers 353, 354 or transfer roller 355 as the same that of the above embodiment) that changes moving direction of the tape base material T before the cylinder body 310a or the moving direction of the tape base material T between cylinder bodies 310a, 310b is provided to spirally wind the tape base material T around each of the cylinder bodies 310a, 310b.

In above described embodiment, two cylinder bodies 310a, 310b are arranged such that the other end side of one cylinder body 310a faces one end side of another cylinder body 310b which is adjacent to one cylinder body 310a and at the same time one end side of one cylinder body 310a faces the other end side of another cylinder body 310b, and the tape base material T is spirally wound around each of the cylinder bodies 310a, 310b from one end side to the other end side of each of the cylinder bodies 310a, 310b and bridges from the other end side of one cylinder body 310a to one end side of another cylinder body 310b. However the present invention is not limited to the embodiment. When more than two of the cylinder bodies are provided, the tape base material T can bridge from one cylinder body at the upstream side to another cylinder body at the downstream side, which is adjacent to one cylinder body at the upstream side. If the tape base material T that bridges between the cylinder bodies can be spirally wound around the circumferential wall of each of the cylinder bodies, each of the cylinder bodies do not have to be arranged adjacent to each other.

In above described embodiment, even numbers of the cylinder bodies 310a, 310b are provided. When a plurality of cylinder bodies 310a, 310b are provided, however, odd numbers of cylinder bodies may be provided in the drying apparatus.

In above described embodiment, the tape base material T floats on the circumferential walls of the cylinder bodies 310a, 310b with a gap therebetween due to the air pressure of the hot air supplied from the hot air generation device. However the present invention is not limited to the embodiment. For example, a process to decrease resistance to the tape base material T (for example, coating process or mirror finishing) may be performed on the outer surface of the circumferential walls of the cylinder bodies 310a, 310b and the tape base material T may come into contact with the circumferential walls of the cylinder bodies 310a, 310b and slide on the circumferential walls of the cylinder bodies 310a, 310b when the coating agent S is dried.

In above described embodiment, the tape base material T is spirally wound around the cylinder bodies 310a, 310b such that the surface of the tape base material T, on which the coating agent S is not coated faces the circumferential walls of the cylinder bodies 310a, 310b. However the present invention is not limited to the embodiment. For example, the tape base material T may be spirally wound around the cylinder bodies 310a, 310b such that the coating agent S faces the circumferential walls of the cylinder bodies 310a, 310b. In this case, as well as the above embodiment, the tape base material T on which the coating agent S is coated may float on the circumferential walls of the cylinder bodies 310a, 310b with a gap therebetween due to the air pressure of the hot air in order to prevent friction between the coating agent S and the circumferential walls of the cylinder bodies 310a, 310b. When the coating agent S is the pressure-sensitive adhesive, if hot air flows directly to this pressure-sensitive adhesive, the pressure-sensitive adhesive tends to be dried from the surface thereof. Thus, as described in the above embodiment, it is preferable to blow the hot air to the tape base material T to indirectly dry the coating agent S in order to get good adhesive characteristics.

In above described embodiment, high temperature hot air blows to the tape base material T. However the present invention is not limited to the embodiment. For example, warm air that has a temperature lower than hot air and higher than room temperature may also blows to the tape base material T or coating agent S on the tape base material T. In other words, hot air or warm air may blow according to the composition of the coating agent S to be dried.

In above described embodiment, the coating agent S coated on one surface of the tape base material T is dried in the drying apparatus 30. However the present invention is not limited to the embodiment. For example, the coating agent S coated on both surfaces of the tape base material T may also be dried in the drying apparatus 30. In other words, the drying apparatus 30 can also manufacture a tape in which both surfaces are adhesive. In this case, the same as the above embodiment, the tape base material T on which the coating agent S is coated may float on the circumferential walls of the cylinder bodies 310a, 310b with a gap therebetween due to the air pressure of the hot air to prevent friction between the coating agent S and the circumferential walls of the cylinder bodies 310a, 310b.

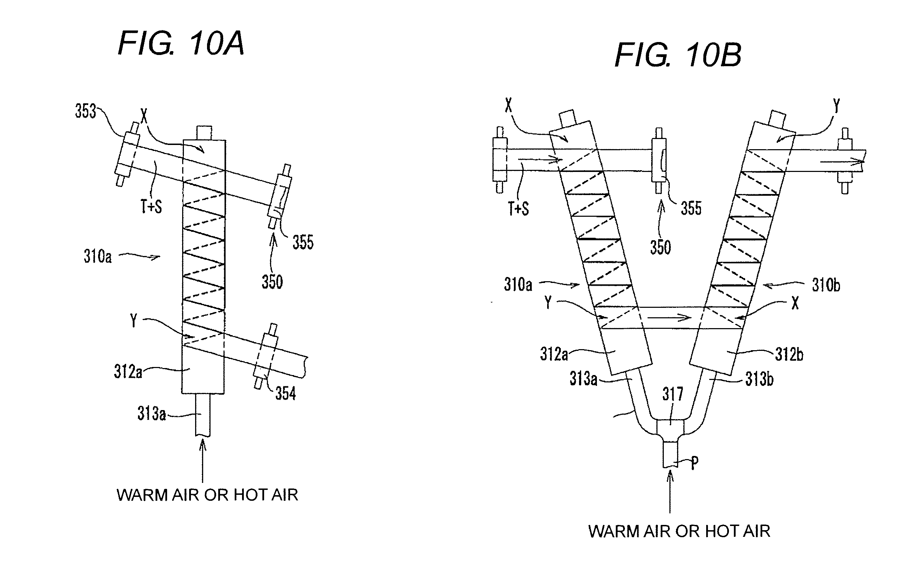

In above described embodiment, the cylinder bodies 310a, 310b is provided to change an attitude thereof (to be tiltable) so that an approach angle of the tape base material T to the circumferential walls of the cylinder bodies 310a, 310b may be changed. For example, however, as shown in Figs. 10A and 10B, the cylinder bodies 310a, 310b may be provided in a fixed state. In this case, the tape base material T is spirally wound around the circumferential walls of the cylinder bodies 310a, 310b.

## Claims

1. A drying apparatus for manufacturing a pressure-sensitive adhesive tape in which a pressure-sensitive adhesive layer is formed on a strip-shaped long tape base material, the drying apparatus that dries coating agent coated at least on one surface of the tape base material, the drying apparatus comprising:
a cylinder body around which the tape base material that is transferred in a lengthwise direction thereof is spirally wound from one end side thereof to the other end side thereof in a slidable state,
wherein the cylinder body is formed with a plurality of air holes on an entire circumferential wall thereof, around which the tape base material is spirally wound, the air holes through which warm air or hot air flows from the inside of the cylinder body to the outside of the cylinder body.

2. The drying apparatus as set forth in claim 1,
wherein the drying apparatus comprises at least two of cylinder bodies each of which is the cylinder body as set forth in claim 1,
wherein the cylinder bodies are arranged such that the other end side of one of the cylinder bodies faces one end side of another of the cylinder bodies, which is adjacent to the one of the cylinder bodies, and one end side of the one of the cylinder bodies faces the other end side of the another of the cylinder bodies, and
wherein the tape base material is spirally wound around each of the cylinder bodies from the one end side thereof to the other end side thereof and bridges from the other end side of one of the cylinder bodies to one end side of another of the cylinder bodies, which is adjacent to the one of the cylinder bodies.

3. The drying apparatus as set forth in claim 2, wherein the cylinder bodies are symmetrically arranged such that a gap between one end side of one of the cylinder bodies and the other end side of another of the cylinder bodies, which is adjacent to the one of the cylinder bodies is wider than a gap between the other end side of the one of the cylinder bodies and one end side of the another of the cylinder bodies.

4. The drying apparatus as set forth in claim 2, wherein the drying apparatus comprises even numbers of cylinder bodies each of which is the cylinder body as set forth in claim1.

5. The drying apparatus as set forth in claim 2, wherein one of the cylinder bodies and another of the cylinder bodies, which is adjacent to the one of the cylinder bodies are arranged to have V shape.

6. The drying apparatus as set forth in claim 1, wherein the cylinder body is provided to change an attitude thereof such that an approach angle of the tape base material to the circumferential wall of the cylinder body can be changed.

7. The drying apparatus as set forth in claim 6, wherein the cylinder body is provided to change an angle of a cylinder axis of the cylinder body with respect to the lengthwise direction of the tape base material transferred to the cylinder body.

8. The drying apparatus as set forth in claim 7, further comprising a tilting device that rotates the cylinder axis of the cylinder body around a rotation axis to change the angle of the cylinder axis of the cylinder body with respect to the lengthwise direction of the tape base material transferred to the cylinder body.

9. The drying apparatus as set forth in claim 8, further comprising a pipe fluidly connected to one end of the cylinder body to introduce the warm air or the hot air into the inside of the cylinder body from a hot air generation device,
wherein the rotation axis of the cylinder body is provided on the pipe and the tilting device is connected to the other end of the cylinder body, and
wherein the pipe is provided with a bellows portion.

10. The drying apparatus as set forth in claim 1, wherein the tape base material which is spirally wound around the cylinder body floats on the circumferential wall with a gap therebetween due to an air pressure of the hot air or the warm air so that the tape base material slides on the circumferential wall.
